# EUROPÄISCHE PATENTSCHRIFT

(11) **EP 1 722 137 B1**
(45) Veröffentlichungstag und Bekanntmachung des Hinweises auf die Patenterteilung: **13.04.2011**
(21) Anmeldenummer: 06008204.7
(22) Anmeldetag: 20.04.2006
(51) Int. Cl.: F16K 7/16

(54) **Ventilvorrichtung**
Valve device
Dispositif de soupape

(30) Priorität: 10.05.2005 DE 102005021583
(43) Veröffentlichungstag der Anmeldung: 15.11.2006
(73) Patentinhaber: Bürkert Werke GmbH, 74653 Ingelfingen (DE)
(72) Erfinder: Scheibe, Ralf, 74653 Künzelsau-Garnberg (DE)
(74) Vertreter: Prinz & Partner

(56) Entgegenhaltungen:
- WO-A-98/55785
- WO-A-2004/025156
- WO-A-2004/064578
- GB-A- 2 399 616
- US-A- 3 250 511
- US-A- 4 986 308
- US-A- 5 027 857

## Beschreibung

Die Erfindung betrifft eine Ventilvorrichtung.

Ventilvorrichtungen nach dem Stand der Technik weisen im allgemeinen einen Gehäusekörper mit einer fluidischen Kammer auf, in die zwei oder mehr Strömungskanäle münden. Dabei ist wenigstens einem der Strömungskanäle ein Dichtsitz zugeordnet. Ferner ist ein Schließkörper vorgesehen, der durch einen Ventilantrieb zwischen einer Schließstellung, in der er den Dichtsitz abdeckt, und einer Öffnungsstellung, in der er den Dichtsitz freigibt, bewegt werden kann. Der Ventilantrieb ist im Fall einer Ventilvorrichtung mit Medientrennung durch eine flexible Membran gegenüber der fluidischen Kammer abgedichtet. Eine derartige Ventilvorrichtung ist also aus mehreren Teilen zusammengesetzt, was insbesondere bei der Ausbildung eines miniaturisierten Ventils problematisch ist, da sich bei sehr kleinen Strukturen die durch die Fertigung der einzelnen Bauteile und deren Zusammenbau bedingten Toleranzen kaum beherrschen lassen. Insbesondere können sich diese Toleranzen in unerwünschter Weise addieren.

WO 98/55785 offenbart eine Ventilvorrichtung mit einem Schaltkörper, der einen starren Ring, eine flexible Membran sowie ein Betätigungselement aufweist. Dieser Schaltkörper ist durch ein Spritzverfahren einteilig hergestellt, wobei zunächst die Membran spritzgegossen wird und anschließend die anderen beiden Elemente direkt auf die Membran spritzgegossen werden. Die Membran ist kreisförmig und größer als notwendig ist, um den Ventilsitz zu verschließen. Um die Lebensdauer der Membran zu vergrößern, ist eine Vorrichtung vorgesehen, die die Membran dreht, so daß immer wieder ein neuer Bereich der Membran den Ventilsitz verschließt.

Die Erfindung schafft demgegenüber eine Ventilvorrichtung, die sich durch sehr geringe Herstellungs- und Montagetoleranzen auszeichnet.

Erfindungsgemäß wird dies durch eine Ventilvorrichtung gemäß Anspruch 1 erreicht, mit einem Gehäusekörper, in dem eine fluidische Kammer mit wenigstens einem Dichtsitz und wenigstens einem Auslaßkanal ausgebildet ist, und einem Schaltkörper, der gießtechnisch einteilig einen starren Rahmen und eine flexible Membran mit wenigstens einem darin integrierten Schließkörper aufweist, wobei der Schaltkörper auf den Gehäusekörper, dessen fluidische Kammer mit der Membran dicht verschließend und mit dem Schließkörper in Gegenüberlage zu dem Dichtsitz, aufgesetzt ist. Die Membran weist im Bereich des Auslaßkanals ein spitz zulaufendes Ende auf. Anstelle mehrerer getrennter Bauteile weist die erfindungsgemäße Ventilvorrichtung also neben dem Gehäusekörper lediglich einen Schaltkörper auf, der einstückig in einem Gießverfahren hergestellt ist und daher lediglich eine gießtechnisch bedingte Toleranz aufweist. So ist es möglich, Ventilvorrichtungen herzustellen, die in einer Dimension kleiner als 4,5 mm sind. Diese können beispielsweise in der Medizintechnik, der Meßtechnik, der Biotechnik, der Kommunikationstechnik, der Physik oder der Chemie eingesetzt werden.

Vorzugsweise ist ein starres Betätigungselement gießtechnisch an die Membran angeschlossen. Auf dieses Betätigungselement kann dann ein beliebiger Ventilantrieb einwirken, um den durch einen Abschnitt des Betätigungselements gebildeten Schließkörper zwischen seiner Öffnungs- und seiner Schließstellung zu bewegen.

Gemäß einer bevorzugten Ausführungsform ist der Schaltkörper in Mehrkomponenten-Spritzgießtechnik hergestellt. Dabei werden zunächst der starre Rahmen und eventuell ein starres Betätigungselement aus einer ersten KunststoffKomponente gegossen, die anschließend mit einem Gummimaterial, das die flexible Membran bildet, umgossen werden. Dabei ist es vorteilhaft, zur Herstellung der starren Bauteile einen Kunststoff zu verwenden, der hohen Temperaturbelastungen standhält. Dies ermöglicht es, die Membran aus einem Gummiwerkstoff mit einer hohen Vulkanisationstemperatur zu fertigen. Natürlich ist es ebenso möglich, den Rahmen und gegebenenfalls das Betätigungselement aus einem anderen temperaturbeständigen Material wie beispielsweise Glas oder Metall herzustellen und lediglich anschließend mit dem Gummimaterial zu umgießen. Durch beide beschriebenen Herstellungsverfahren können die Funktionsmaßtoleranzen der ursprünglich drei Einzelteile Rahmen, Membran und Betätigungselement auf eine gießtechnisch bedingte Toleranz für die Membrane reduziert werden.

Der Rahmen des Schaltkörpers kann Ausnehmungen zur formschlüssigen Verbindung mit der Membran aufweisen. Dadurch wird eine stabile Verbindung der unterschiedlichen Werkstoffe erzielt. Ebenso ist auch eine Verbindung durch Kraftschluß möglich, indem das Gummimaterial der Membran beim Vulkanisieren auf beispielsweise ein nachträglich eingefügtes Betätigungselement aufgeschrumpft wird.

Gemäß einer Ausführungsform der Erfindung ist das Betätigungselement ein mit dem Material der Membran umgossenes Einlegeteil. Alternativ kann natürlich auch, wie bereits beschrieben, das Betätigungselement in einem ersten Gießschritt hergestellt oder aber nachträglich in den Schaltkörper eingefügt sein.

Bei dem Betätigungselement kann es sich um einen Wippenkörper oder um einen Stößel handeln. Im Falle eines Wippenkörpers ist das abwechselnde Verschließen und Freigeben zweier Dichtsitze möglich.

Vorzugsweise beträgt die größte Abmessung des Schaltkörpers bis zu 16 mm, gemäß einer besonders bevorzugten Ausführung sogar nur bis zu 4,5 mm. Derartig kleine Strukturen waren bisher aufgrund der bereits angesprochenen Toleranzen bei der Herstellung und der Montage der einzelnen Bauteile nicht realisierbar.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 eine Schnittansicht einer Ventilvorrichtung gemäß einer ersten Ausführungsform der Erfindung;
- Figur 2 eine perspektivische Schnittansicht eines Schaltkörpers, wie er bei der Ventilvorrichtung gemäß Figur 1 zum Einsatz kommt;
- Figur 3 eine Perspektivansicht der der fluidischen Kammer der Ventilvorrichtung zugewandten Seite des Schaltkörpers aus Figur 2;
- Figur 4 eine Schnittansicht einer Ventilvorrichtung ;
- Figur 5 eine Perspektivansicht des Schaltkörpers aus Figur 4;
- Figur 6 eine perspektivische Schnittansicht des Schaltkörpers aus Figur 4;
- Figur 7 eine Perspektivansicht der der fluidischen Kammer der Ventilvorrichtung zugewandten Seite des Schaltkörpers aus Figur 4;
- Figur 8 eine Perspektivansicht eines Schaltkörpers von der fluidischen Kammer einer Ventilvorrichtung aus gesehen;
- Figur 9 eine perspektivische Schnittansicht des Schaltkörpers aus Figur 8;
- Figur 10 eine Perspektivansicht des Schaltkörpers aus Figur 8, von einer Betätigungsseite aus gesehen; und
- Figur 11 eine schematische Darstellung des erfindungsgemäßen Verfahrens.

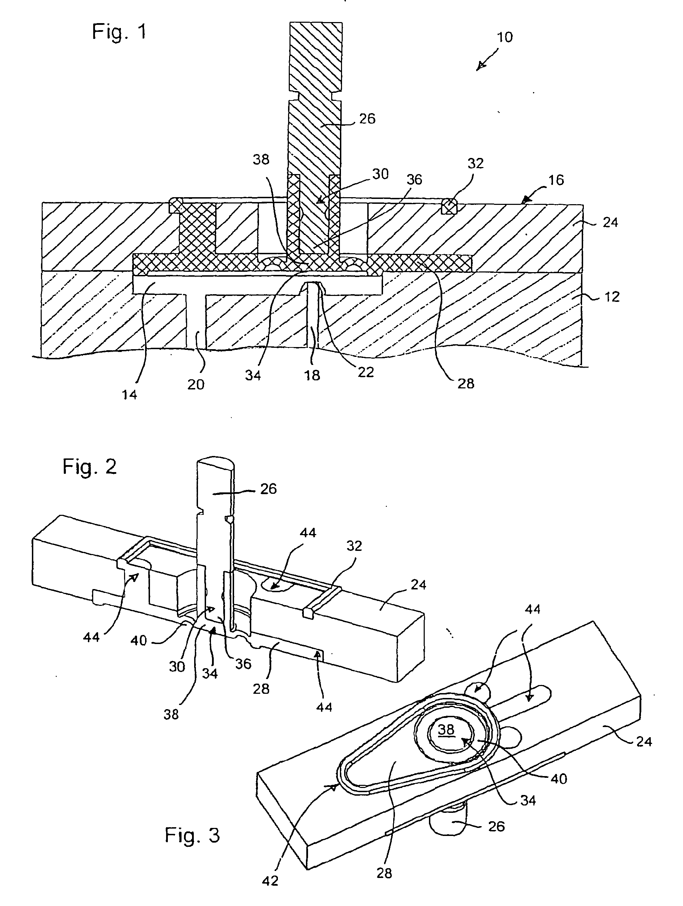

Figur 1 zeigt eine Ventilvorrichtung 10, die einen Gehäusekörper 12 mit einer darin ausgebildeten fluidischen Kammer 14 sowie einen mit dem Gehäusekörper 12 verbundenen Schaltkörper 16 aufweist. Bevorzugt handelt es sich bei der Ventilvorrichtung 10 um ein sogenanntes miniaturisiertes Ventil, das eine besonders geringe Baubreite von weniger als 4,5 mm aufweist. Der Gehäusekörper 12 einerseits und der Schaltkörper 16 andererseits bilden zwei selbständige, miteinander verbundene Bauteile.

In die fluidische Kammer 14 münden zwei Strömungskanäle für ein fluides Medium, von denen einer als Einlaßkanal 18, der andere als Auslaßkanal 20 ausgebildet ist. Der Einlaßkanal 18 weist einen Dichtsitz 22 auf.

Der Schaltkörper 16, der in den Figuren 2 und 3 separat dargestellt ist, umfaßt einen starren Rahmen 24, ein starres Betätigungselement 26 in Form eines Stößels sowie eine flexible Membran 28, wobei die Membran 28 in einem Mehrkomponenten-Spritzgießverfahren einteilig mit dem Rahmen 24 und dem Betätigungselement 26 hergestellt wird. Die Membran 28 wird zusammen mit dem Rahmen 24 und dem Betätigungselement 26 vulkanisiert. Dabei schrumpft das Gummimaterial der Membran 28 auf das Betätigungselement 26 auf, wodurch eine kraftschlüssige Verbindung entsteht. Dabei sind sowohl der Rahmen 24 als auch das Betätigungselement 26 aus einem Kunststoffmaterial hoher Temperaturbeständigkeit hergestellt.

Neben der Membran 28 sind am Schaltkörper 16 weitere Dichtkonturen 32 vorgesehen, die auf der der fluidischen Kammer 14 abgewandten Seite des Schaltkörpers 16 angeordnet sind. Auf dieser Seite kann ein beliebiger Ventilantrieb angebracht werden, der mit dem Betätigungselement 26 zusammenwirkt, indem er es in (in der Darstellung der Figuren 1 und 2) vertikaler Richtung bewegt, um so einen Schließkörper 34 in Anlage an den Dichtsitz 22 zu bringen oder von diesem zu lösen. Der Schließkörper 34 wird dabei durch einen der Kammer 14 zugewandten Abschnitt 36 des Betätigungselements 26 sowie den ihn umgebenden Abschnitt 38 der Membran 28 gebildet, ist also direkt in die Membran 28 integriert:

Der Schließkörper 34 ist von einer Sicke 40 in der Membran 28 umgeben, was eine Betätigung des Schließkörpers 34 deutlich erleichtert, da die Membran 28 im Bereich der Sicke 40 sehr viel dünner ausgestaltet ist und daher der Betätigung weniger Widerstand entgegensetzt. Durch die Ausgestaltung der Membran 28 mit einem spitz zulaufenden Ende 42 im Bereich des Auslaßkanals 20 wird ein besonders geringes Totvolumen erzielt.

Der Rahmen 24 weist mehrere Ausnehmungen 44 auf, die der formschlüssigen Verbindung mit der Membran 28 dienen. Dazu werden die Ausnehmungen 44 bei der Herstellung der Membran 28 ebenfalls mit dem die Membran 28 bildenden Gummimaterial gefüllt.

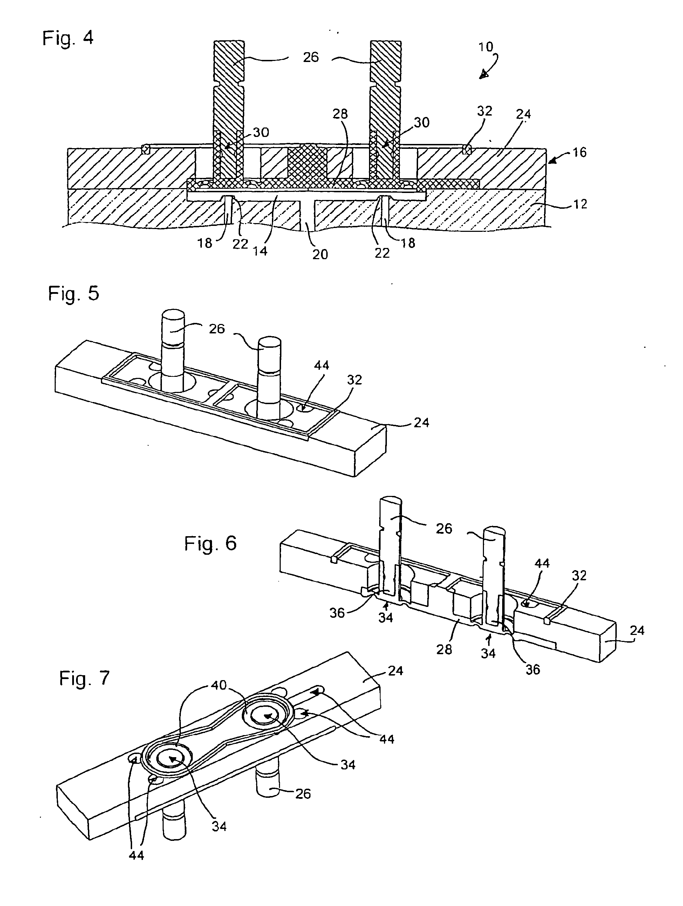

Die in den Figuren 4 bis 7 gezeigte Ventilvorrichtung unterscheidet sich von der ersten Ausführungsform der Figuren 1 bis 3 lediglich dadurch, daß zwei Dichtsitze 22 und folglich auch zwei Schließkörper 34 mit einer gemeinsamen Membran 28 vorgesehen sind, wobei die Schließkörper 34 unabhängig voneinander betätigt werden können. Da die Ventilvorrichtung ansonsten der ersten Ausführungsform entspricht, wird hierauf nicht näher eingegangen.

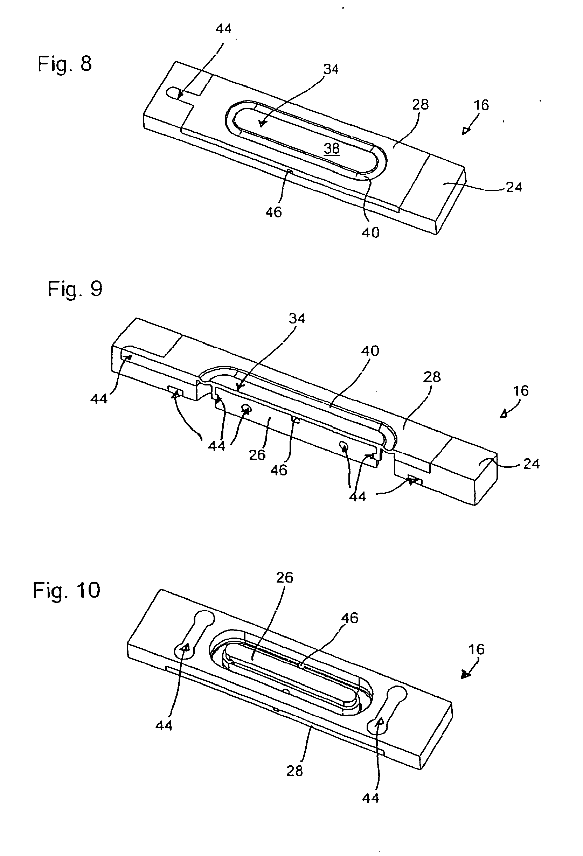

Die Figuren 8 bis 10 schließlich zeigen einen Schaltkörper 16. Auch hierbei wird lediglich auf die Unterschiede zur beschriebenen Ventilvorrichtung eingegangen, wobei gleiche Bauteile gleiche Bezugszeichen tragen. Anstelle eines Stößels weist der Schaltkörper 16 gemäß den Figuren 8 bis 10 einen Wippenkörper als Betätigungselement 26 auf, der als Einlegeteil gearbeitet ist und mit dem Material der Membran 28 umgossen wird. Der Wippenkörper ist über eine starre Achse 46 im Rahmen 24 gelagert und kann beispielsweise mittels eines Magnetantriebs derart betätigt werden, daß zwei beiderseits der Achse 46 angeordnete Ventilsitze abwechselnd geöffnet und verschlossen werden. Neben dem Rahmen 24 weist auch der Wippenkörper Ausnehmungen 44 zur formschlüssigen Verbindung mit der Membran 28 auf. Der Wippenkörper bildet somit zwei einstückig ausgebildete Schließkörper 34 für zwei Dichtsitze.

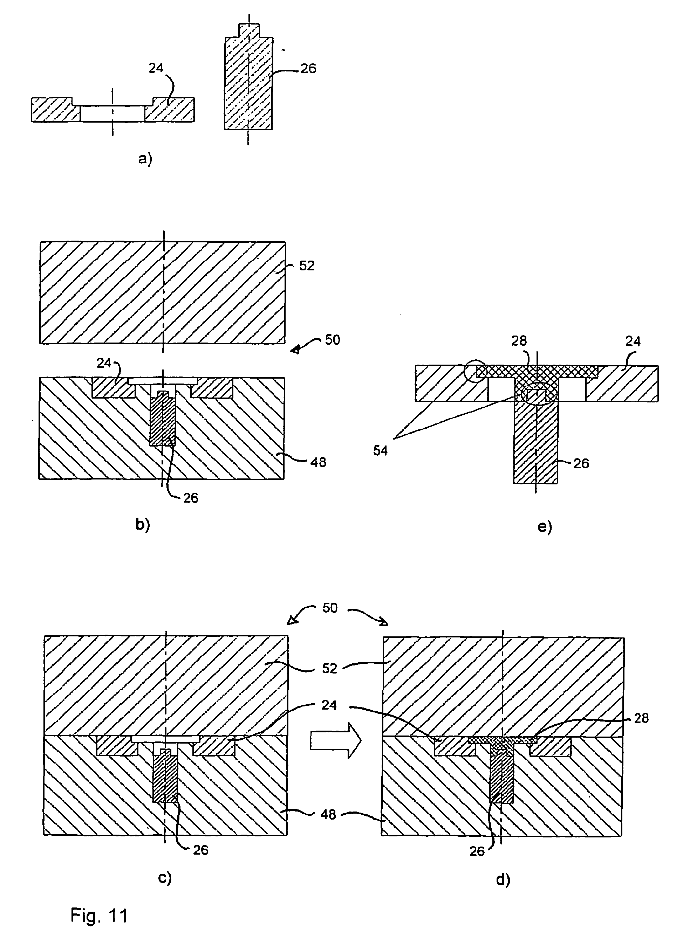

Die Herstellung eines Schaltkörpers 16 wird im folgenden anhand Figur 11 erläutert. Zunächst werden der Rahmen 24 und das Betätigungselement 26, hier ein Stößel, vorgefertigt (Figur 11 a) und als Einlegeteile in einer ersten Hälfte 48 einer Gießform 50 positioniert (Figur 11 b). Alternativ können der Rahmen 24 und das Betätigungselement 26 durch ein Spritzgießverfahren direkt in der Gießform 48 hergestellt werden. Anschließend wird, wie in Figur 11c gezeigt, die Gießform 50 durch eine zweite Hälfte 52 geschlossen, und Rahmen 24 und Betätigungselement 26 werden in der Gießform 50 mit einem Elastomer umgossen, das die Membran 28 bildet (Figur 11 d). Schließlich wird das aus Rahmen 24, Betätigungselement 26 und Membran 28 bestehende Verbundteil aus der Gießform 50 entnommen. Aufgrund der speziellen Formgebung des Rahmens 24 und des Betätigungselements 26 weist das fertige Verbundteil, wie in Figur 11e dargestellt ist, mehrere Bereiche 54 mit formschlüssiger Verbindung auf.

## Patentansprüche

1. Ventilvorrichtung mit
einem Gehäusekörper (12), in dem eine fluidische Kammer (14) mit wenigstens einem Dichtsitz (22) und wenigstens einem Auslaßkanal (20) ausgebildet ist, und
einem Schaltkörper (16), der gießtechnisch einteilig einen starren Rahmen (24) und eine flexible Membran (28) mit wenigstens einem darin integrierten Schließkörper (34) aufweist,
wobei der Schaltkörper (16) auf den Gehäusekörper (12), dessen fluidische Kammer (14) mit der Membran (28) dicht verschließend und mit dem Schließkörper (34) in Gegenüberlage zu dem Dichtsitz (22), aufgesetzt ist,
**dadurch gekennzeichnet, daß** die Membran (28) im Bereich des Auslaßkanals (20) ein spitz zulaufendes Ende aufweist.

2. Ventilvorrichtung nach Anspruch 1, bei der ein starres Betätigungselement (26) gießtechnisch an die Membran (28) angeschlossen ist.

3. Ventilvorrichtung nach Anspruch 1 oder 2, deren Schaltkörper (16) in Mehrkomponenten-Spritzgießtechnik hergestellt ist.

4. Ventilvorrichtung nach einem der vorhergehenden Ansprüche, bei der der Rahmen (24) des Schaltkörpers (16) Ausnehmungen (44) zur formschlüssigen Verbindung mit der Membran (28) aufweist.

5. Ventilvorrichtung nach einem der vorhergehenden Ansprüche, bei der das Betätigungselement (26) ein mit dem Material der Membran (28) umgossenes Einlegeteil ist.

6. Ventilvorrichtung nach einem der vorhergehenden Ansprüche, bei der das Betätigungselement (26) ein Wippenkörper ist.

7. Ventilvorrichtung nach einem der Ansprüche 1 bis 5, bei der das Betätigungselement (26) ein Stößel ist.

8. Ventilvorrichtung nach einem der vorhergehenden Ansprüche, bei der die größte Abmessung des Schaltkörpers (16) bis zu 16 mm beträgt.

9. Ventilvorrichtung nach einem der vorhergehenden Ansprüche, bei der die größte Abmessung des Schaltkörpers (16) bis zu 4,5 mm beträgt.

## Claims

1. A valve device comprising
a housing body (12) having a fluidic chamber (14) formed therein which has at least one valve seat (22) and at least one outlet duct (20), and
a valve control member (16) produced in one piece by a molding technique to include a rigid frame (24) and a flexible diaphragm (28) with at least one valve body (34) integrated therein,
the valve control member (16) being placed on the housing body (12), its diaphragm (28) tightly sealing the fluidic chamber (14) thereof, and with its valve body (34) located opposite the valve seat (22),
**characterized in that** the diaphragm (28) has a tapered end in the area of the outlet duct (20).

2. The valve device according to claim 1, wherein a rigid actuating member (26) is connected to the diaphragm (28) by a molding technique.

3. The valve device according to claim 1 or 2, the valve control member (16) of which is produced by multicomponent injection-molding.

4. The valve device according to any of the preceding claims, in which the frame (24) of the valve control member (16) has recesses (44) for a form-fitting connection with the diaphragm (28).

5. The valve device according to any of the preceding claims, in which the actuating member (26) is an insert encased by molding with the material of the diaphragm (28).

6. The valve device according to any of the preceding claims, in which the actuating member (26) is a rocker body.

7. The valve device according to any of claims 1 to 5, in which the actuating member (26) is a tappet.

8. The valve device according to any of the preceding claims, in which the largest dimension of the valve control member (16) is up to 16 mm.

9. The valve device according to any of the preceding claims, in which the largest dimension of the valve control member (16) is up to 4.5 mm.

## Revendications

1. Dispositif de valve, comportant
un corps de boîtier (12) dans lequel est réalisée une chambre (14) fluidique avec au moins un siège d'étanchéité (22) et au moins un canal de sortie (20), et
un corps de commutation qui, par technique de moulage, présente d'un seul tenant un cadre (24) rigide et une membrane (28) flexible avec au moins un corps de fermeture (34) intégré dans celle-ci,
le corps de commutation (16) étant placé sur le corps de boîtier (12) en fermant de manière étanche sa chambre (14) fluidique par la membrane (28) et avec le corps de fermeture (34) en position opposée au siège d'étanchéité (22),
**caractérisé en ce que** la membrane (28) présente une extrémité en pointe dans la zone du canal de sortie (20).

2. Dispositif de valve selon la revendication 1, dans lequel un élément d'actionnement rigide (26) est raccordé à la membrane (28) par technique de moulage.

3. Dispositif de valve selon les revendications 1 ou 2, dont le corps de commutation (16) est fabriqué par technique de moulage par injection à plusieurs composants.

4. Dispositif de valve selon l'une quelconque des revendications précédentes, dans lequel le cadre (24) du corps de commutation (16) présente des évidements (44) pour la liaison avec la membrane (28) par coopération de formes.

5. Dispositif de valve selon l'une quelconque des revendications précédentes, dans lequel l'élément d'actionnement (26) est un insert surmoulé avec le matériau de la membrane (28).

6. Dispositif de valve selon l'une quelconque des revendications précédentes, dans lequel l'élément d'actionnement (26) est un corps à bascule.

7. Dispositif de valve selon l'une des revendications 1 à 5, dans lequel l'élément d'actionnement (26) est un poussoir.

8. Dispositif de valve selon l'une quelconque des revendications précédentes, dans lequel la plus grande encombrement du corps de commutation (16) mesure jusqu'à 16 mm.

9. Dispositif de valve selon l'une quelconque des revendications précédentes, dans lequel le plus grand encombrement du corps de commutation (16) mesure jusqu'à 4,5 mm.
